# FASCICULE DE BREVET EUROPEEN

(11) **EP 2 681 351 B1**
(45) Date de publication et mention de la délivrance du brevet: **11.02.2015**
(21) Numéro de dépôt: 12712304.0
(22) Date de dépôt: 01.03.2012
(51) Int. Cl.: C25D 13/20, C25D 13/22, C25D 5/02, C25D 5/18, G01N 27/327

(54) **PROCEDE DE STRUCTURATION DE SURFACE UTILISANT DES PARTICULES COLLOIDALES SOUS CHAMP ELECTRIQUE, SURFACES OBTENUES PAR LEDIT PROCÉDÉ ET LEURS APPLICATIONS**
VERFAHREN ZUR OBERFLÄCHENSTRUKTURIERUNG MITTELS KOLLOIDALEN PARTIKELN UNTER ELEKTRISCHEN FELD, SOMIT HERGESTELLTEN OBERFLÄCHEN UND DEREN ANWENDUNGEN
METHOD FOR SURFACE STRUCTURING USING COLLOID PARTICLES UNDER AN ELECTRIC FIELD, SURFACES OBTAINED BY SAID METHOD AND USES THEREOF

(30) Priorité: 03.03.2011 FR 1151745
(43) Date de publication de la demande: 08.01.2014
(73) Titulaire: Centre National de la Recherche Scientifique, 75016 Paris (FR)
(72) Inventeur: FAURE, Chrystel, F-33650 Saint Selve (FR); BAZIN, Damien, F-33000 Bordeaux (FR)
(74) Mandataire: Goulard, Sophie
(86) Numéro de dépôt international: PCT/FR2012/050427
(87) Numéro de publication internationale: WO 2012/117205

(56) Documents cités:
- WO-A2-2010/029550
- US-A- 5 855 753
- US-A1- 2003 102 222
- M. BAYATI ET AL.: "An Aproach to Fabrication of Metal Nanoring Arrays", LANGMUIR, vol. 26, no. 5, 28 janvier 2010 (2010-01-28), pages 3549-3554, XP002660354, DOI: 10.1021/la904287t cité dans la demande
- A. VALSESIA ET AL.: "Selective Immobilization of Protein Clusters on Polymeric Nanocraters", ADVANCED FUNCTIONAL MATERIALS, vol. 16, 4 mai 2006 (2006-05-04), pages 1242-1246, XP002660355, DOI: 10.1002/adfm.200500653 cité dans la demande

## Description

La présente invention est relative à un procédé de préparation de surfaces inorganiques et/ou organiques comportant des micro- ou nanostructures organisées, aux surfaces micro- ou nano-structurées obtenues par la mise en oeuvre de ce procédé, ainsi qu'aux diverses applications de ces surfaces structurées, notamment dans le domaine de la photonique, de la catalyse, du stockage magnétique ou des biocapteurs.

Les procédés de préparation de surfaces nanostructurées, c'est-à-dire le plus généralement de surfaces comportant des nanostructures organiques ou inorganiques, font l'objet d'une recherche constante dans la mesure où ces surfaces présentent des applications variées en fonction de la nature et de la morphologie de ces nanostructures.

Les surfaces recouvertes de nanostructures métalliques organisées trouvent des applications dans des domaines émergents tels que la nano-photonique ou encore comme substrat pour la spectroscopie Raman exaltée en surface (SERS). L'une des propriétés de ces surfaces est d'accroître le signal Raman obtenu de plusieurs ordres de grandeur, d'où leur intérêt dans l'industrie analytique, bio-analytique pour des biocapteurs. En effet, lorsque des structures métalliques sont suffisamment proches les unes des autres, leurs plasmons de surface peuvent alors se coupler, générant des « points chauds » électromagnétiques responsables de l'effet d'exaltation du signal. La distance entre ces structures est donc un paramètre crucial qu'il faut pouvoir contrôler finement.

Les réseaux de nanostructures polymériques sont essentiellement conçus pour des applications de biotechnologie, les nanostructures servant de points d'ancrage pour des biomolécules telles que des oligonucléotides pour les puces à ADN ou des protéines, notamment des enzymes, pour les bio-capteurs. L'une des difficultés est que ces nanostructures doivent être séparées par une matrice sur laquelle les biomolécules que l'on souhaite ancrer spécifiquement sur les nanostructures ne puissent pas se fixer. Lorsque le polymère utilisé pour fabriquer les nanostructures est un polymère conducteur de l'électricité, tel que par exemple un polypyrrole, les réseaux peuvent alors avoir des applications comme micro-/nano-électrodes.

La préparation de surfaces nano-structurées peut se faire globalement selon deux grands types de techniques : les techniques dites « séquentielles » et les techniques dites « parallèles » ou « à masques ».

Selon la technique dite « séquentielle », les nanostructures sont déposées à la surface d'un substrat point-par-point en balayant la surface avec un appareil perfectionné type pointe de microscope (électronique ou à force atomique ou à effet tunnel) ou encore par un faisceau ionique ou électronique. Ces techniques sont onéreuses, longues et nécessitent un savoir-faire important. En contrepartie, les tailles obtenues sont faibles, de l'ordre de quelques nanomètres.

Selon la technique dite « parallèle », le dépôt est effectué sur une surface préalablement masquée. Les masques les plus répandus sont en alumine poreuse car la taille des pores et leur séparation peuvent être contrôlées au cours de leur fabrication. Ce procédé reste néanmoins long car il nécessite deux étapes de synthèse du masque, ainsi que plusieurs étapes de dépôt du métal, par exemple par évaporation par faisceau d'électrons, évaporation sous vide ou bien encore par voie électrolytique, puis une étape de retrait du masque pour obtenir le réseau de nanoplots escompté. Ce procédé présente par ailleurs des risques de pollution chimique notable.

Une alternative à l'utilisation des ces masques poreux est l'utilisation de la lithographie colloïdale. Il a par exemple déjà été proposé, notamment dans l'article de Bayati M. et al., Langmuir, 2010, 26(5), 3549-3554, un procédé de fabrication de surfaces comportant des nano-couronnes métalliques (or, platine, cuivre), consistant à recouvrir la surface d'un substrat sur lequel on souhaite effectuer le dépôt avec une dispersion de billes de polystyrène qui vont s'auto-organiser en une monocouche à la surface dudit substrat, puis après évaporation du solvant (eau), à recouvrir le substrat par une solution d'un précurseur métallique (sel métallique) afin que le précurseur infiltre, par capillarité, les espaces laissés libres entre les billes de polystyrène. Après réduction du sel métallique pour provoquer la fixation du métal sur la surface, le substrat est rincé, puis les billes de polystyrène constituant le masque sont éliminées par traitement au chloroforme. On obtient ainsi un dépôt métallique se présentant soit sous la forme de nanoplots si la période d'imprégnation par la solution de sel métallique a été longue soit sous la forme de nanocouronnes si la période d'imprégnation par la solution de sel métallique a été courte. Ce procédé est cependant long à mettre en oeuvre et ne permet pas de moduler la morphologie et la taille des dépôts obtenus avec une grande précision.

L'utilisation de masques constitués d'un réseau de particules colloïdales a également été envisagée pour la préparation de surfaces nanostructurées par un réseau de plots de polymères. C'est ainsi que Valsevia et al. (Adv. Func. Mat., 2006, 16, 1242-1246) proposent par exemple un procédé de nanostructuration de surface consistant à déposer une couche de polymère (acide polyacrylique : PAA) par la technique de dépôt amplifié par plasma sur un substrat, puis à déposer, par enduction centrifuge (« spin-coating ») sur cette couche de polymère, une couche de sphères colloïdales sous la forme d'un réseau hexagonal compact. Le procédé comprend ensuite une étape au cours de laquelle ces sphères sont abrasées sous plasma afin de diminuer leur taille, puis une étape supplémentaire permet de déposer un autre polymère (polyéthylèneglycol : PEG) sur ces sphères et sur la couche de PAA qui a été rendue accessible par l'abrasion des sphères colloïdales. Enfin, les sphères sont éliminées laissant apparaitre des plots de PAA organisés en réseau hexagonal dans une matrice de PEG. Selon ce procédé la taille des plots de PAA est contrôlée par la taille des sphères et le temps d'abrasion, paramètres qui permettent également de contrôler la distance inter-plots. Ce procédé est donc complexe et nécessite de multiples étapes, ainsi qu'un appareillage couteux.

Il n'existe pas actuellement de procédé permettant d'accéder de façon simple, facilement modulable, peu couteuse et en un minimum d'étapes à des surfaces nanostructurées, de morphologie, d'épaisseur et de rugosité contrôlées.

Les inventeurs se sont donc donné pour but de mettre au point un procédé permettant d'élaborer de telles surfaces.

La présente invention a donc pour objet un procédé de préparation d'une surface nanostructurée par des nanostructures organisées inorganiques et/ou organiques, ledit procédé mettant en oeuvre des particules colloïdales et une cellule électrochimique comportant une électrode positive et une électrode négative, lesdites électrodes étant planes et parallèles l'une par rapport à l'autre, faces conductrices en vis-à-vis, et séparées l'une de l'autre au moyen d'un espaceur isolant comportant au moins deux ouvertures et délimitant un volume libre (V) entre les deux électrodes, ledit procédé étant caractérisé en ce qu'il comprend les étapes suivantes :
i) la préparation d'une dispersion de particules colloïdales hydrophiles monodisperses chargées électriquement (particules P1) dans une phase aqueuse, lesdites particules P1 ayant une taille supérieure ou égale à 0,5 µm environ ;
ii) la préparation d'une dispersion de particules colloïdales chargées électriquement (particules P2) dans une phase aqueuse, lesdites particules P2 ayant une taille inférieure à celle des particules P1, étant de même charge électrique que les particules P1, et renfermant éventuellement au moins une espèce électrochimique ;
iii) l'introduction de la dispersion de particules P1 dans le volume libre (V) par l'une des ouvertures de l'espaceur ;
iv) la migration des particules P1 vers la surface de l'électrode de charge opposée à celle des particules P1 (électrode de travail), par application d'un champ électrique sinusoïdal perpendiculairement auxdites électrodes,
v) l'application d'un champ électrique sinusoïdal de fréquences décroissantes à potentiel constant, pour provoquer l'agrégation des particules P1 à la surface de l'électrode de travail ;
vi) l'augmentation progressive de la fréquence jusqu'à obtention d'un réseau cristallin constitué d'une monocouche de particules P1 à la surface de l'électrode de travail ;
vii) l'immobilisation des particules P1 sous la forme dudit réseau cristallin, par superposition au champ électrique sinusoïdal, d'un champ électrique continu de signe opposé à la charge des particules P1, puis extinction du champ électrique sinusoïdal tout en maintenant le champ électrique continu pendant une durée suffisante pour provoquer l'adhésion des particules P1 à la surface de l'électrode de travail ;
viii) l'introduction, dans le volume libre V de la cellule électrochimique, de la dispersion de particules P2 et l'application d'un champ électrique continu pendant une durée suffisante pour provoquer la migration et la fixation des particules P2 sur la surface libre de l'électrode de travail sur laquelle s'est formé le réseau organisé de particules P1, et lorsque les particules P2 renferment une espèce électrochimique, l'oxydation ou la réduction de ladite espèce électrochimique à la surface de l'électrode de travail ;
ix) l'élimination des particules P1 de la surface de l'électrode pour obtenir une surface nanostructurée par les particules P2 ou par l'espèce électrochimique oxydée ou réduite apportée par les particules P2.

Le procédé de préparation de ces surfaces présente en outre les avantages suivants :
- il est rapide, simple et peu cher à mettre en oeuvre dans la mesure où il ne nécessite que peu de matière première (particules), aucun appareillage lourd ou de haute technologie, un simple générateur de tension suffisant ;
- il ne nécessite pas une qualification particulière, les techniques utilisées étant simples à mettre en oeuvre ;
- il permet de réaliser la nanostructuration sur de grandes surfaces, c'est-à-dire des surfaces de plusieurs cm² ;
- il est facilement modulable : la variation des paramètres électriques au niveau du générateur de tension, de la concentration en particules colloïdales P1 et/ou P2 et de la durée de l'application des champs électriques permet d'obtenir des nanostructurations de surfaces variées (morphologie variée : trous, couronnes, et organisation variée : réseaux hexagonaux compacts ou pas ; triplets de particules P1 isolés les uns des autres, lesdits triplets étant arrangés en bâtons (sphères de particules P1 accolées trois à trois selon un axe longitudinal) et/ou en triangles) ;
- il est polyvalent dans la mesure où il permet d'accéder aussi bien à des surfaces nanostructurées par un dépôt métallique que par un dépôt polymère, pouvant notamment se présenter sous la forme de nano-trous ou de nano-couronnes ;
- il n'est pas nocif pour l'environnement, ni dangereux puisqu'il n'utilise que des champs électriques faibles et pas de solvant organique.
- les risques de pollution par le milieu extérieur sont minimisés puisque toutes les étapes se font en milieu « fermé » (dans la cellule).

Selon une forme de réalisation préférée de l'invention, les particules P1 sont choisies parmi les particules sphériques de diamètre moyen compris entre 0,5 µm et 5 µm environ.

Les particules P1 sont de préférence des sphères polymères fonctionnalisées en surface par des groupements anioniques tels que par exemple des groupements sulfate, carboxylate ou phosphate ou par des groupements cationiques tels que par exemple des groupements ammonium.

Selon une forme de réalisation préférée du procédé conforme à l'invention, les particules P1 sont des sphères de polystyrène fonctionnalisées en surface par des groupements sulfate.

La quantité de particules P1 au sein de la dispersion varie de préférence de 0,1 à 0,6 % en masse environ, soit, pour des particules ayant une densité de 1, de 3.10⁸ à 5,75.10⁹ particules / mL environ. Cette quantité de particules suffit pour recouvrir une surface de 2 cm². Cette quantité peut être ajustée en fonction du réseau cristallin de particules P1 que l'on souhaite réaliser sur l'électrode de travail. La quantité de particules P1 au sein de la dispersion doit permettre de déposer au maximum une monocouche de particules sur la surface. Dans cette limite, plus la quantité de particules P1 au sein de la dispersion sera élevée, plus la surface sera recouverte de façon homogène et plus le réseau cristallin formé à l'issue de l'étape v) sera dense pour une surface donnée.

Les particules P2 peuvent constituer le dépôt ou servir de vecteur à une espèce électrochimique qui constituera le dépôt après réaction sur l'électrode.

Ainsi selon une première forme de réalisation du procédé conforme à l'invention, les particules P2 constituent le dépôt et sont choisies parmi les polymères chargés comportant au moins une fonction organique ayant une affinité pour l'électrode de travail, les particules métalliques fonctionnalisées en surface par au moins une fonction organique ayant une affinité pour l'électrode de travail et les nanotubes de carbone fonctionnalisés en surface par au moins une fonction organique ayant une affinité pour l'électrode de travail.

Au sens de la présente invention, on entend par fonction organique ayant une affinité pour l'électrode, toute fonction permettant la fixation des particules P2 à la surface de l'électrode de travail. Ces fonctions sont en particulier choisies parmi les groupements comportant au moins une fonction thiol et les fonctions azotées telles que les groupements aminés comme par exemple l'hexaméthyldiamine ou le di-amine octane, et les groupements cycliques dans lesquels le ou les atomes d'azote font partie intégrante du cycle tels que le groupement 1,4,8,11-tetraazacyclotetradécane (également connu sous la dénomination commerciale Cyclam®) ou un sel de thionine tel que l'acétate de thionine.

A titre de particules P2 constituant le dépôt, on peut en particulier citer les particules de poly(styrène, divinylbenzène) fonctionnalisées en surface par des groupements azotés tels que le 1,4,8,11-tetraazacyclotetradécane, les particules de polystyrène fonctionnalisées en surface par des molécules d'hexaméthyldiamine, les particules d'or fonctionnalisées en surface par du thiol-polyéthylèneglycol-amine ou encore du di-thiol-octane ou encore du di-amine-octane et les nanotubes de carbone fonctionnalisés en surface par de l'acétate de thionine.

Selon une seconde forme de réalisation du procédé conforme à l'invention, les particules P2 ne constituent pas le dépôt mais servent de vecteur à une espèce électrochimique qui constituera le dépôt après réaction sur l'électrode. Selon cette variante, les particules P2 sont alors de préférence choisies parmi les vésicules lamellaires à base d'au moins un tensioactif et renfermant ladite espèce électrochimique.

Par « vésicules lamellaires à base d'au moins un tensioactif » au sens de la présente invention, on entend des vésicules comprenant au moins une paroi sous forme d'une bicouche contenant au moins un tensioactif. Une abondante littérature est consacrée aux vésicules lamellaires souvent désignées par vésicules unilamellaires, paucilamellaires ou multilamellaires suivant qu'elles comprennent respectivement une, un nombre limité ou un nombre important de bicouches de tensioactif. Les liposomes et les niosomes constituent des exemples de vésicules lamellaires à base de tensioactifs.

Selon une forme de réalisation préférée de l'invention, les particules P2 sont constituées de vésicules multilamellaires à structure en oignon, c'est-à-dire de vésicules de forme sensiblement sphérique constituées d'une succession de bicouches concentriques.

La charge portée par les particules P2 déterminera, bien entendu, quelle électrode sera utilisée à titre d'électrode de travail. Ainsi, lors de l'application du champ électrique continu, les vésicules portant une charge positive, migreront vers la surface de l'électrode de travail faisant fonction de cathode, et inversement, les vésicules portant une charge négative migreront vers la surface de l'électrode de travail faisant fonction d'anode.

L'espèce électrochimique contenue dans ces vésicules est de préférence choisie parmi les ions métalliques et les monomères rédox. A titre d'ion métallique, on peut en particulier citer les ions cuivriques, les ions plomb, nickel, cadmium, cobalt, ferrique, zinc, etc... A titre de monomère rédox, on peut en particulier citer le pyrrole, l'aniline et le thiophène.

De telles vésicules sont par exemple décrites dans la demande internationale WO 00/08237.

Les dimensions des vésicules lamellaires utilisées selon l'invention peuvent varier dans une large gamme à condition qu'elles présentent toutefois un diamètre inférieur à celui des particules P1. Selon une forme de réalisation préférée de l'invention, les vésicules lamellaires ont des dimensions comprises entre 0,1 µm et 1,5 µm.

La quantité de particules P2 au sein de la dispersion varie de préférence de 1 à 60 % en masse, et encore plus préférentiellement de 5 à 50 % en masse. Cette quantité peut être ajustée en fonction de l'épaisseur et de la morphologie du dépôt que l'on souhaite obtenir sur la surface de l'électrode. Ainsi lorsque la quantité de particules P2 est importante, de l'ordre de 50 % en masse dans l'eau, des couronnes sont obtenues qui se forment autour des particules P1. L'épaisseur du dépôt entre les couronnes et la hauteur de couronnes augmentent toutes deux avec le temps d'application du champ électrique continu et donc avec la quantité de particules P2 attirées. Lorsque la quantité de particules P2 est faible, de l'ordre de 5 % en masse dans l'eau, le dépôt comporte des trous qui se sont formés sous les particules P1. Le diamètre de ces trous, tout comme celui des couronnes dépend notamment du diamètre des particules P1.

L'introduction des dispersions P1 et P2 dans le volume libre de la cellule électrochimique peut facilement être réalisée par exemple à l'aide d'une seringue.

La fréquence du champ électrique sinusoïdal appliqué lors de l'étape iv) varie de préférence de 8 à 4 kHz.

Selon une forme de réalisation particulière, le champ électrique appliqué lors de l'étape iv) entre les deux électrodes varie de préférence de 100 à 150 V/cm et le réseau cristallin de particules P1 est alors un réseau hexagonal.

Selon une autre forme de réalisation particulière, le champ électrique appliqué lors de l'étape iv) entre les deux électrodes varie de 200 V/cm à 250 V/cm et le réseau cristallin de particules P1 est alors un réseau sous forme de chaînes constituées en moyenne par 3 particules P1.

La durée de l'étape iv) varie généralement de 15 à 90 min environ. Pour une fréquence de champ électrique donnée, cette durée est choisie en fonction de la taille des particules. Plus les particules sont petites, plus cette durée est longue.

Selon une forme de réalisation préférée de l'invention, la fréquence du champ électrique lors de l'étape v) décroit progressivement de 5 à 0,4 kHz, par paliers successifs d'une durée variant indépendamment de 20 à 2 min environ.

Toujours selon une forme de réalisation préférée de l'invention, la fréquence du champ électrique lors de l'étape vi) augmente progressivement de 0,4 à 1,6 kHz, par paliers successifs d'une durée variant indépendamment de 20 à 2 min environ.

Le réseau cristallin de particule P1 obtenu à la surface de l'électrode de travail à l'issue de l'étape vi) peut se présenter sous la forme d'un réseau hexagonal compact, d'un réseau hexagonal non compact ou bien encore sous la forme d'un réseau constitué d'un assemblage de particules P1, généralement de triplets de particules P1 isolés les uns des autres, lesdits triplets étant arrangés en bâtons (sphères de particules P1 accolées trois à trois selon un axe longitudinal) et/ou en triangles. Il est à noter qu'à l'issue de l'étape v), les particules P1 sont déjà organisées sous forme d'un réseau cristallin mais la distance entre particules est la plus faible possible (contact le plus souvent). C'est l'augmentation progressive de la fréquence lors de l'étape vi) qui va ensuite permettre d'éloigner les particules les unes des autres jusqu'à l'obtention du réseau attendu.

Lors de l'étape vii), le champ électrique continu est de préférence appliqué avec une différence de potentiel variant de 40 à 100 V/cm.

La durée de l'étape vii) varie de préférence de 0,1 à 5 s.

Lors de l'étape viii), le champ électrique continu est de préférence appliqué avec une différence de potentiel variant de 80 à 120 V/cm.

La durée de l'étape viii) varie de préférence de 5 à 30 min.

L'élimination des particules P1 peut être réalisée facilement, par exemple par rinçage à l'eau ou à l'aide d'un solvant organique tel que par exemple le tetrahydrofurane (THF) ou bien encore par application puis retrait d'un ruban adhésif sur la surface de l'électrode de travail. Bien entendu, lors de l'élimination des particules P1, l'homme de l'art prendra soin que la technique utilisée n'entraîne pas également l'élimination des particules P2 ou de l'espèce électrochimique oxydée ou réduite ayant été apportée par les particules P2.

Les surfaces nanostructurées obtenues par le procédé défini ci-dessus sont prêtes à être utilisées directement après l'étape ix) d'élimination des particules P1.

Des traitements thermiques destinés à induire la fusion des particules P2 pour obtenir une matrice continue peuvent être réalisés lorsque les particules P2 sont de nature polymère par exemple.

Il est également possible de procéder à une étape supplémentaire de fonctionnalisation de la surface nanostructurée par exemple par des biomolécules d'intérêt telles que des protéines ou des acides nucléiques (oligonucléotides, ADN).

Ainsi, selon une forme de réalisation particulière de l'invention, le procédé conforme à l'invention comprend en outre, après l'étape viii) de fixation des particules P2, une étape supplémentaire de fonctionnalisation des particules P2 par une biomolécule d'intérêt. Ladite étape supplémentaire de fonctionnalisation peut en particulier être réalisée soit juste après l'étape viii) de fixation des particules P2 et avant l'étape ix) d'élimination des particules P1, soit après l'étape ix) d'élimination des particules P1.

Selon une première forme de réalisation de cette variante, les particules P2 possèdent en surface des ions métalliques, notamment lorsque les particules P2 sont fonctionnalisées en surface par des groupements azotés tels que le 1,4,8,11-tetraazacyclotetradécane qui ont la propriété de complexer les ions métalliques divalents tels que le nickel ou le zinc et peuvent alors être fonctionnalisées par des biomolécules portant un groupement histidine. Dans ce cas, l'étape de fonctionnalisation supplémentaire des particules P2 par une biomolécule peut être réalisée par une simple mise en contact de la surface portant les particules P2 avec une solution de la biomolécule dans un tampon. La durée de la mise en contact (incubation) est dans ce cas d'environ 1 heure. Après incubation de la solution de biomolécule, la surface est alors rincée, par exemple par une solution tampon.

Selon une deuxième forme de réalisation de cette variante, les particules P2 sont des particules préalablement fonctionnalisées en surface par un groupement streptavidine, biotine ou encore par un anticorps. Dans ce cas, les particules P2 pourront servir à lier de façon spécifique des protéines portant respectivement des ligands biotine, avidine ou encore l'antigène correspondant à l'anticorps.

Enfin, selon une troisième forme de réalisation de cette variante, les particules P2 portent des charges positives en surface. Dans ce cas, elles peuvent être fonctionnalisées par de l'ADN ou des oligonucléotides par affinité électrostatique.

A titre d'exemple, ces biomolécules d'intérêt peuvent être choisies parmi l'ensemble des protéines portant une étiquette histidine, un ligand streptavidine ou un ligand biotine, les antigènes, les molécules d'acides nucléiques telles que les oligonucléotides et l'ADN.

La surface nanostructurée obtenue selon le procédé décrit précédemment est caractérisée en ce qu'elle se présente sous la forme d'une surface fonctionnalisée par un réseau organisé de particules P2 ou par l'espèce électrochimique réduite ou oxydée transportée initialement par les particules P2.

Plus particulièrement, de telles surfaces peuvent se présenter sous la forme de surfaces isolantes comprenant un réseau organisé de trous conducteurs de l'électricité, lesdits trous ayant un diamètre de 300 nm à 1,5 µm et étant espacés les uns des autres de 1 à 4 µm (distance inter-trous de centre à centre). Elles peuvent également se présenter sous la forme d'un film de l'espèce électrochimique réduite ou oxydée, ledit film comportant des trous, des couronnes métalliques ou des coques de diamètre variant de 300 nm à 1,5 µm, espacés les uns des autres de 1 à 4 µm (distance inter-trous de centre à centre). Lorsque la surface se présente sous la forme d'un réseau organisé de couronnes métalliques, leur hauteur varie de 25 à 160 nm.

Selon une forme de réalisation particulière la surface est fonctionnalisée par une ou plusieurs biomolécules d'intérêt telles que définies précédemment.

En fonction de la nature des particules P2 utilisées ou de la nature de l'espèce électrochimique transportée par les particules P2, les surfaces nanostructurées peuvent avoir des applications variées.

Ainsi, selon une première forme de réalisation, l'invention a également pour objet la surface obtenue selon le procédé en utilisant, à titre de particules P2, des polymères chargés comportant au moins une fonction organique ayant une affinité pour l'électrode de travail, peut être utilisé pour la détection moléculaire en biotechnologie (industrie pharmaceutique par exemple). Ces surfaces peuvent également être utilisées comme masques pour d'autres dépôts dans les trous laissés vides par les particules P1.

Selon une autre forme de réalisation, la surface obtenue selon le procédé en utilisant, à titre de particules P2 des vésicules lamellaires transportant des ions métalliques, le dépôt effectué à la surface de l'électrode de travail est alors de nature métallique (nanocouronnes métalliques par exemple), et les surfaces obtenues peuvent être utilisées en photonique, en catalyse, en stockage magnétique, comme surfaces super-hydrophobes transparentes, pour la fabrication de biocapteurs, pour la détection optique, etc...

Les surfaces nanostructurées par du cuivre peuvent aussi avoir une application pour limiter la formation de biofilms (effet antibactérien du cuivre).

La présente invention est illustrée par les exemples de réalisation suivants, auxquels elle n'est cependant pas limitée.

### EXEMPLES

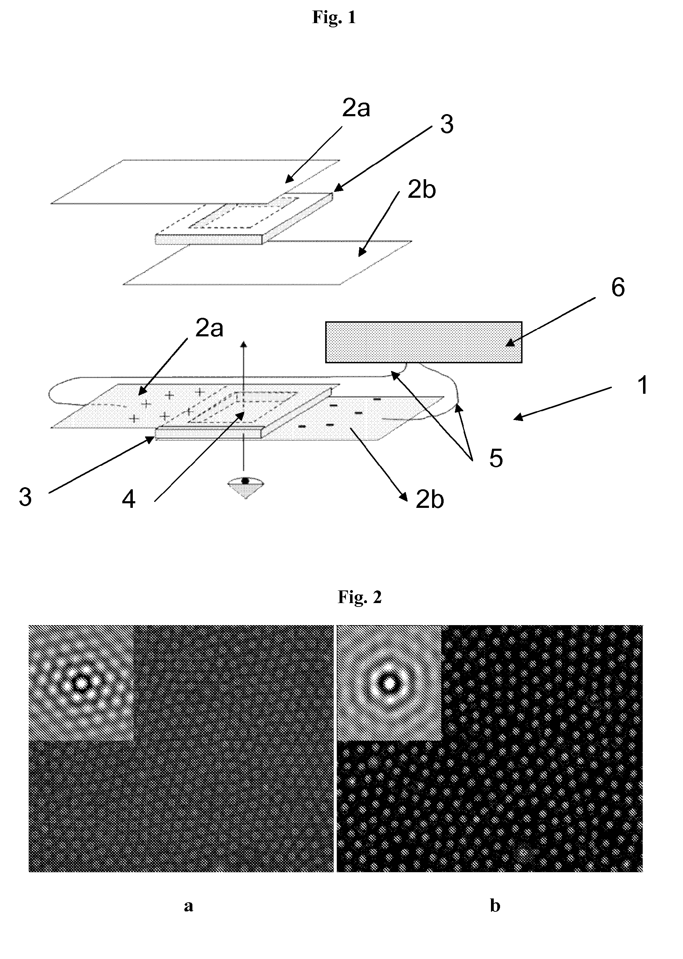

Les différentes expériences de nanostructuration de surfaces présentées dans les exemples ci-après ont été réalisées dans une cellule électrochimique (1) telle que schématisée sur la figure 1 annexée constituée de deux électrodes (2a, 2b) planes et parallèles (lames de verre recouvertes d'un film d'ITO (indium-oxyde d'étain) d'une épaisseur de l'ordre d'une centaine d'angstrôms), ayant les dimensions suivantes 25 mm x 50 mm et une épaisseur de 0,5 mm. Ces deux électrodes (2a, 2b) reposent l'une sur l'autre, faces conductrices en vis-à-vis, et sont espacées l'une de l'autre d'une distance de 250 µm par un joint isolant (3) de forme carrée ou circulaire en polytetrafluoroéthylène (PTFE), comportant deux ouvertures (non représentées) permettant d'introduire les dispersions de particules colloïdales P1 et P2 dans le volume (4) délimité par le joint isolant (3) une fois placé entre les deux électrodes (2a, 2b). Les deux électrodes (2a, 2b) sont reliées par des fils conducteurs (5) tels que des fils de cuivre, aux bornes positive et négative d'un générateur de tension (6).

### Exemple 1 : Préparation d'une surface nanostructurée par une matrice polymère comportant des trous selon le procédé conforme à l'invention

Dans cet exemple, on a préparé des surfaces nanostructurées par une matrice polymère comportant des trous conducteurs de l'électricité ayant un diamètre d'environ 1,1 µm, 630 nm et 445 nm, créant ainsi un réseau de micro- ou de nano-électrodes.

### 1) Première étape : Préparation d'un masque inverse de particules colloïdales P1

On a introduit 50 µl d'une dispersion aqueuse de particules P1-a à 0,1 % en masse, constituées de billes de polystyrène de diamètre 2 µm, fonctionnalisées en surface par des groupements sulfate, vendues sous la dénomination commerciale Polybeads ® (et déjà fonctionnalisées) par la société Polysciences Inc. dans la cavité d'une cellule électrochimique à l'aide d'une micropipette.

Cette dispersion a été laissée à sédimenter pendant 20 minutes sous champ électrique sinusoïdal (Fréquence : 5 kHz, 120 V/cm). La séquence indiquée dans le Tableau I suivant a ensuite été appliquée pour organiser les particules P1 et les figer sur l'électrode positive dans un réseau hexagonal non compact :

**TABLEAU I**

| **Temps)** | **Fréquence (kHz)** | **Différence de potentiel alternatif (V)** | **Différence de potentiel continu (V)** |
|---|---|---|---|
| 20 min | 5 | 3 | - |
| 2 min | 4 | 3 | - |
| 2 min | 3 | 3 | - |
| 2 min | 2 | 3 | - |
| 2 min | 1,8 | 3 | - |
| 2 min | 1,6 | 3 | - |
| 2 min | 1,4 | 3 | - |
| 2 min | 1,2 | 3 | - |
| 2 min | 1 | 3 | - |
| 2 min | 0,9 | 3 | - |
| 2 min | 0,8 | 3 | - |
| 2 min | 0,9 | 3 | - |
| 2 min | 1 | 3 | - |
| 2 min | 1,2 | 3 | - |
| 1 sec | 1,2 | 3 | 1 |
| 20 min | - | - | 2,3 |

On a obtenu un réseau hexagonal de particules colloïdales P1-a ayant pour distance caractéristique 4,0 µm de centre à centre.

L'expérience a ensuite été poursuivie en descendant la fréquence jusqu'à 400 Hz tout en maintenant la différence de potentiel à 3 V.

La figure 2 annexée est une photographie en microscopie optique à contraste de phase (grossissement x 630) de la surface de l'électrode comportant le réseau hexagonal de particules colloïdales P1-a, dont la distance, centre-à-centre est fixée par la fréquence du champ électrique sinusoïdal. Sur la figure 2a) les particules sont organisées en réseau hexagonal compact (cas où l'expérience a été poursuivie jusqu'à une fréquence finale = 400 Hz), et sur la figure 2b), elles sont organisées en un réseau hexagonal non compact (fréquence finale = 1200 Hz, Tableau 1).

Une expérience similaire a été réalisée en utilisant des billes de polystyrène P1-b et P1-c de diamètre respectif de 3 µm et de 1 µm, fonctionnalisées en surface par des groupements amine, vendues sous la dénomination commerciale Polybeads ® (et déjà fonctionnalisées) par la société Polysciences Inc.

Les séquences électriques appliquées pour l'organisation des billes P1-b et P1-c sont données respectivement dans les Tableaux II et III ci-après :

**TABLEAU II**

| **Temps** | **Fréquence (kHz)** | **Différence de potentiel alternatif (V)** | **Différence de potentiel continu (V)** |
|---|---|---|---|
| 20 min | 5 | 3 | - |
| 2 min | 2,5 | 3 | - |
| 2 min | 2 | 3 | - |
| 2 min | 1,8 | 3 | - |
| 2 min | 1,6 | 3 | - |
| 2 min | 1,4 | 3 | - |
| 2 min | 1,2 | 3 | - |
| 2 min | 1 | 3 | - |
| 2 min | 0,8 | 3 | - |
| 2 min | 0,6 | 3 | - |
| 10 min | 0,6 | 5 | - |
| 1 sec | 0,6 | 5 | 1 |
| 5 min | - | - | 2,3 |
| 90 min | 5 | 3,5 | - |
| 10 min | 2,5 | 3,5 | - |
| 10 min | 1,5 | 3,5 | - |
| 10 min | 1 | 3,5 | - |
| 10 min | 0,8 | 3,5 | - |
| 2 min | 0,8 | 4,5 | - |
| 2 min | 0,8 | 5.5 | - |
| 2 min | 0,8 | 6,5 | - |
| 2 min | 0,8 | 7,5 | - |
| 1 sec | 0,8 | 5,5 | 2 |
| 10 min | - | - | 2,3 |

### 2) Deuxième étape : Fixation des particules colloïdales P2

On a préparé une dispersion aqueuse à 3 % en masse de particules colloïdales P2 constituées de nanosphères (diamètre 18 nm) de poly(styrène, divinylbenzène) fonctionnalisées en surface par un ligand complexant d'ions, le Cyclam ® (1,4,8,11-tetraazacyclotetradécane) selon le protocole décrit dans C. Larpent et al., Comptes-rendue de Chimie, 2003, 6, 1275-1283. Ces particules ont une teneur en ions cuivriques comprise entre 0,2 et 0,3 mmol/ g de particules. Dans cette dispersion, les ions cuivriques étaient complexés par le ligand Cyclam® fixé à la surface des nanosphères.

On a également utilisé, à titre de particules colloïdales P2, des billes de polystyrène commerciales (Polybeads) de taille variée 50 nm, 100 nm et 200 nm. (sous forme de dispersions aqueuses à 2,6% en masse de billes de polystyrène). 10 µL de ces dispersions ont été diluées dans 1 mL d'une solution d'hexaméthylènediamine (0,1 mol/L) sous agitation pendant 16 heures.

Pour chaque dispersion préparée, 50 µl de dispersion ont ensuite été injectés dans la cavité de la cellule électrochimique à l'aide d'une micropipette. Un champ électrique continu de -92 V/cm a ensuite été appliqué entre les deux électrodes pendant 30 min, afin d'induire la migration des particules P2 vers l'électrode comportant le réseau hexagonal de particules P1-a (respectivement P1-b ou P1-c) et leur fixation sur ladite électrode, entre les particules P1-a (respectivement P1-b ou P1-c).

### 3) Troisième étape : Elimination des particules P1

Après extinction du champ, la cellule a été ouverte, lavée à l'eau distillée et à l'éthanol, puis séchée. Les particules P1-a (respectivement P1-b ou P1-c) ont ensuite été éliminées de la surface de l'électrode à l'aide d'un ruban adhésif qui a été appliqué sur l'électrode, laissant un réseau de micro-trous de diamètre variable, dans une matrice polymère constituée des particules P2.

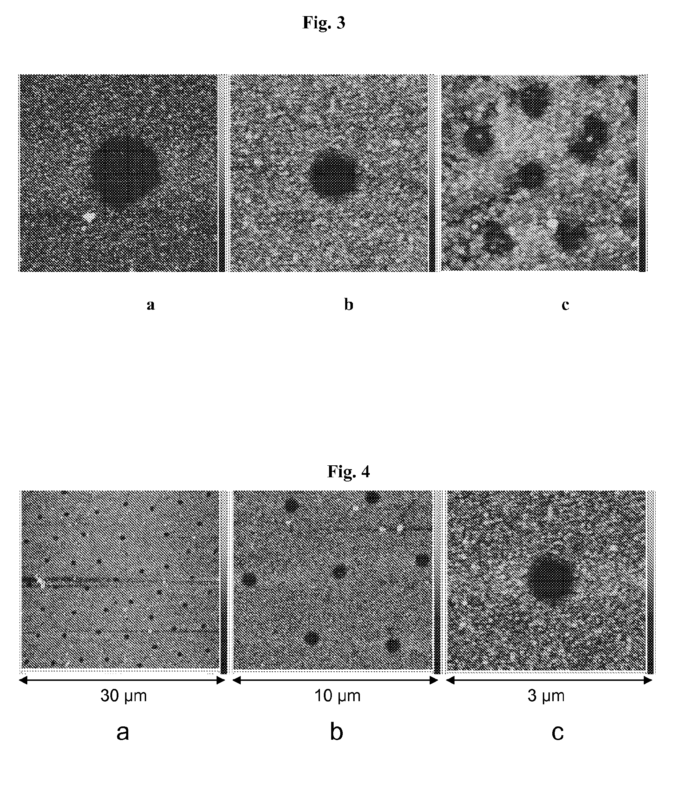

Des images obtenues par microscopie à force atomique (MFA) de la surface des électrodes ainsi nanostructurées sont données par la figure 3 annexée : trous obtenus dans la matrice de particules P2 à partir du masque réalisé en utilisant respectivement a) les particules P1-b : trous de 1,1 µm de diamètre environ, b) les particules P1-a : trous de 630 nm de diamètre environ, et c) les particules P1-c : trous de 445 nm de diamètre environ. Sur ces 3 images, l'échelle est identique.

La figure 4 annexée représente les images obtenues par MFA de la surface de l'électrode obtenue en utilisant les particules P1-a de diamètre 2 µm, puis les particules P2, à différents grossissements : échelle a) : 30 µm b) : 10 µm et c) 3 µm.

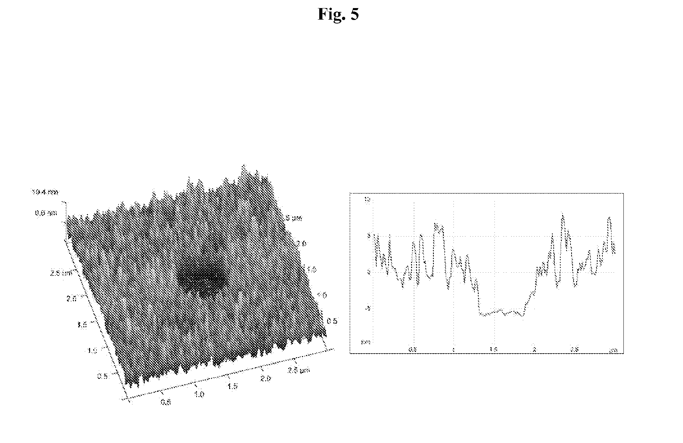

La figure 5 annexée est une représentation 3D de l'image d'un trou observé par MFA.

La figure 6 annexée représente les images obtenues par MFA de la surface de l'électrode obtenue en utilisant les particules P1-a de diamètre 2 µm, puis les particules P2 de polystyrène commerciales de taille 200 nm (Fig. 6a) et 100 nm (Fig. 6b).

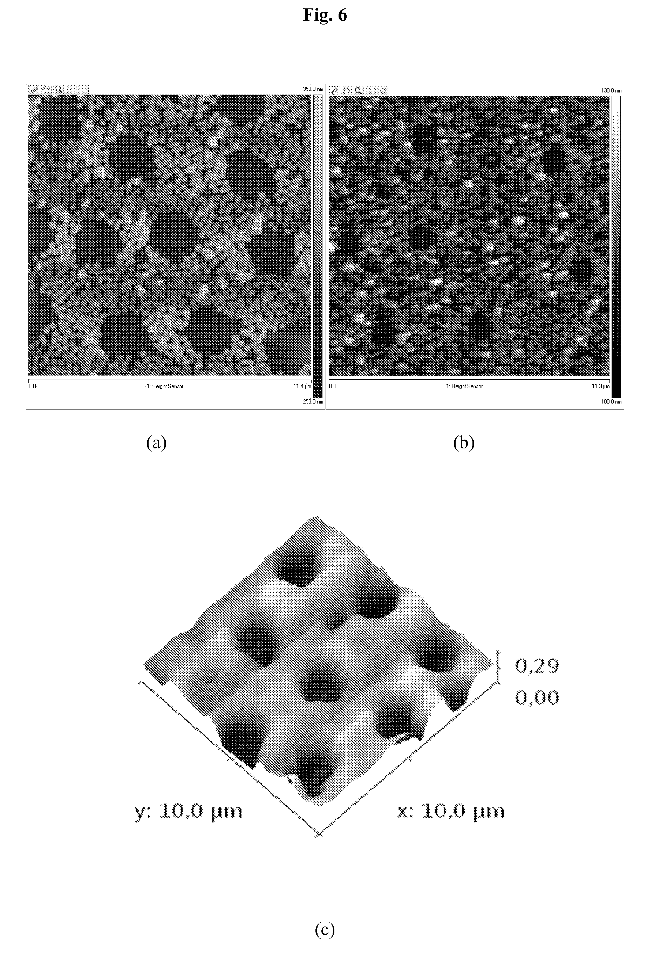

Ces surfaces comportant des trous dans une matrice constituée de particules colloïdales peuvent être chauffées pour faire fusionner les particules. Pour les particules P2 de 200 nm, un traitement thermique à 175°C pendant 35 minutes a été effectué. La figure 6c annexée est une représentation 3D de l'image obtenue par MFA de la surface de l'électrode traitée thermiquement.

### 4) Comportement en réseaux de microélectrodes.

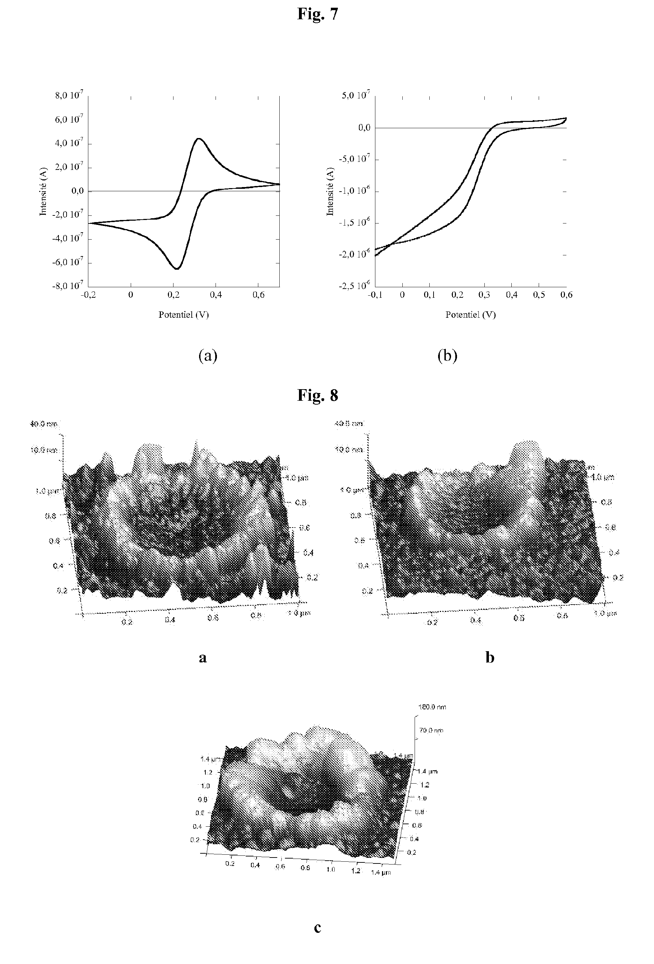

On est parti de la surface structurée à partir des billes P1-a. Après fixation des nanosphères P2 (diamètre 18 nm) et élimination des particules P1-a, la surface a été traitée thermiquement selon le protocole suivant : montée en température de la température ambiante jusqu'à 220°C puis un palier à 220°C pendant 35 minutes et descente en température jusqu'à la température ambiante pendant 1 heure. Ce traitement thermique a eu pour but de faire fusionner entre elles les nanosphères afin de rendre totalement isolante la matrice polymère. La surface est donc constituée de trous conducteurs laissés libres par l'élimination des particules P1-a. Cette surface traitée thermiquement a servi d'électrode de travail dans un montage à 3 électrodes avec pour électrode référence Ag/AgCl et une contre-électrode constituée d'une grille de platine. Les voltammogrammes obtenus sur une solution de ferricyanure (K₃Fe(CN)₆) à 2 mM et de nitrate de potassium (KNO₃) à 1M sont donnés sur la figure 7 annexée sur laquelle la densité de courant J en A/mm² est fonction du potentiel E en volts avant traitement thermique (figure 7a) et après traitement thermique (figure 7b). Le balayage a été réalisé à une vitesse de 5 mV/s. Le voltammogramme obtenu après traitement thermique a la forme sigmoïdale caractéristique du comportement électrochimique d'un réseau de micro-électrodes.

### Exemple 2 : Préparation d'une surface nanostructurée à matrice polymère fonctionnelle selon un procédé ne faisant pas partie de l'invention

Dans cet exemple, on a utilisé une surface recouverte de particules P2 (particules fonctionnalisées par des groupements Cyclam ®), non organisées. Autrement dit l'étape de fixation des particules P1 telle que décrite ci-dessus à l'exemple 1 n'a pas été effectuée. Le but de cet exemple était de montrer que les particules P2 peuvent être post-fonctionnalisées par une biomolécule.

Ces surfaces ont ensuite été fonctionnalisées par une protéine la GFP (acronyme de l'expression anglaise *Green Fluorescent Protein* »), préalablement marquée à l'aide d'un groupement 6-histidine.

La lame recouverte des particules P2 a tout d'abord été traitée par une solution aqueuse d'ions métalliques à 0,1 mol/L, par exemple ici une solution de NiCl₂. Pour cela, la lame a été placée en position verticale dans un tube contenant 25 mL de la solution d'ions Ni²⁺. Elle y a été laissée pendant 1 h environ, puis la lame a été rincée 3 fois avec de l'eau ultra-pure et 2 fois avec un tampon HEPES (pH=7) contenant de l'imidazole (20 mM). Une solution de protéine à 0,1 mg/ml de cette même solution tampon a été préparée et a été centrifugée à 20800 g pendant 5 min à 4°C afin d'ôter les agrégats de protéines. Cette solution a alors été déposée avec une micropipette sur la lame pour recouvrir la zone de dépôt de particules P2. Après 1 h d'incubation, la lame a été rincée 5 fois avec la solution tampon précédemment décrite.

On a obtenu une surface fonctionnalisée par la GFP.

### Exemple 3 : Préparation d'une surface nanostructurée à matrice métallique et démonstration de son caractère super-hydrophobe

Dans cet exemple, on a préparé une surface nano-structurée par des couronnes de cuivre.

### 1) Première étape : Préparation d'un masque inverse de particules colloïdales P1

On a introduit 50 µl d'une dispersion aqueuse de particules P1 à 0,1 % en masse, constituée de billes de polystyrène de diamètre 2 µm vendues sous la dénomination commerciale Polybeads ® par la société Polysciences, Inc. et déjà fonctionnalisées par des groupements sulfate, dans la cavité d'une cellule électrochimique C1 à l'aide d'une micropipette.

Cette dispersion a été laissée à sédimenter pendant 20 minutes sous champ électrique sinusoïdal (Fréquence : 5 kHz, 120 V/cm). Une séquence similaire à celle indiquée dans le Tableau I de l'exemple 1 ci-dessus a ensuite été appliquée pour organiser les particules P1 et les figer sur l'électrode positive dans un réseau hexagonal. Le temps de collage des particules P1 (dernière ligne du tableau) a été fixée à 5 min ou 20 minutes selon l'expérience.

### 2) Deuxième étape : Fixation des particules colloïdales P2

On a préparé une dispersion de particules P2 à 500 mg/ml constituée de vésicules multilamellaires contenant des ions cuivriques, par simple mélange équi-massique d'une solution aqueuse de sulfate cuivrique (0,68 M) et d'un tensioactif de type éthoxylate d'huile de suif vendu sous la dénomination commerciale Genamin T020 ® par la société Clariant, et dont la particularité est de s'auto-organiser sous la forme de vésicules multilamellaires en présence d'une phase aqueuse.

On a introduit 50 µl de cette dispersion dans la cavité de la cellule électrochimique, puis on a appliqué un champ électrique continu de -92 V/cm pendant 20 min, afin d'attirer les vésicules de tensioactif contenant les ions cuivriques qui vont se réduire sur l'électrode. Les particules P1 ont ainsi subi 20 minutes de collage.

La même expérience a été répétée dans trois autres cellules électrochimiques (C2, C3 et C4), en utilisant exactement les mêmes dispersions de particules P1 et de particules P2, mais en appliquant les paramètres suivants :
- cellule électrochimique C2 : 20 minutes de collage des particules P1 et 5 minutes d'attraction des particules P2 ;
- cellule électrochimique C3 : 5 minutes de collage des particules P1 et 20 minutes d'attraction des particules P2 ;
- cellule électrochimique C4 : 5 minutes de collages des particules P1 et 130 minutes d'attraction des particules P2.

### 3) Troisième étape : Elimination des particules P1 et P2

L'extinction du champ provoque le détachement des vésicules P2 (vides de cuivre) de l'électrode. Les cellules ont ensuite été ouvertes, lavées à l'eau et à l'éthanol pour éliminer les vésicules P2 et toute trace organique, puis séchées.

Les particules P1 ont ensuite été éliminées de la surface des électrodes dans chacune des cellules C1 à C4 à l'aide d'un ruban adhésif qui a été appliqué sur l'électrode, laissant un réseau de micro-couronnes de cuivre. Pour la cellule C4, la lame a été plongée dans une solution de tétrahydrofurane pur pendant 20 min, puis rincée au THF. Elle a de nouveau été plongée pendant 20 min dans la solution de THF puis rincée au THF et à l'éthanol avant d'être séchée.

La figure 8 est une représentation 3D des images obtenues par microscopie à force atomique des couronnes métalliques formées à la surface de chacune des électrodes : a) cellule électrochimique C1, b) cellule électrochimique C2 ; c) cellule électrochimique C3.

Sur cette figure, on peut voir que la morphologie des couronnes de cuivre peut être modulée en fonction de la durée d'application des champs électriques lors de la migration et de la fixation des particules P1 et P2.

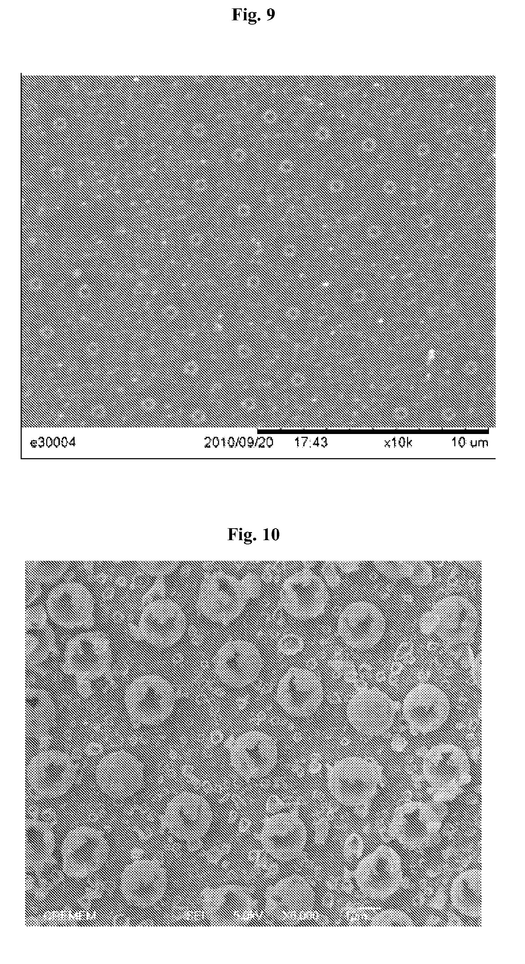

La figure 9 annexée est une photographie prise par microscopie électronique à balayage (MEB), grossissement x 3500, de la surface de l'électrode nanostructurée de la cellule C2.

La figure 10 annexée est une photographie prise par microscopie électronique à balayage (MEB), grossissement x 5000, de la surface de l'électrode nanostructurée de la cellule C4. Ici des « coques » de cuivre organisées sont obtenues.

### 4) Démonstration du caractère super-hydrophobe des surfaces organisées de cuivre

L'angle de contact statique des surfaces formées pour des temps de réduction différents et pour un même temps de collage de 5 min a été mesuré, en particulier sur les surfaces provenant de C3 correspondant au point 20 min et C4 correspondant à 130 min. La mesure consiste à déposer une goutte d'eau ultra-pure à l'aide d'une seringue sur la surface dont on veut mesurer l'angle de contact. Une photo de la goutte est prise à incidence rasante. Après numérisation du contour de la goutte, l'angle que fait la tangente à la goutte au point triple solide-liquide-gaz et la surface solide est calculé. Cet angle est appelé angle de contact (θ). Cet angle de contact est contrôlé par le temps d'application du champ permettant la réduction du cuivre.

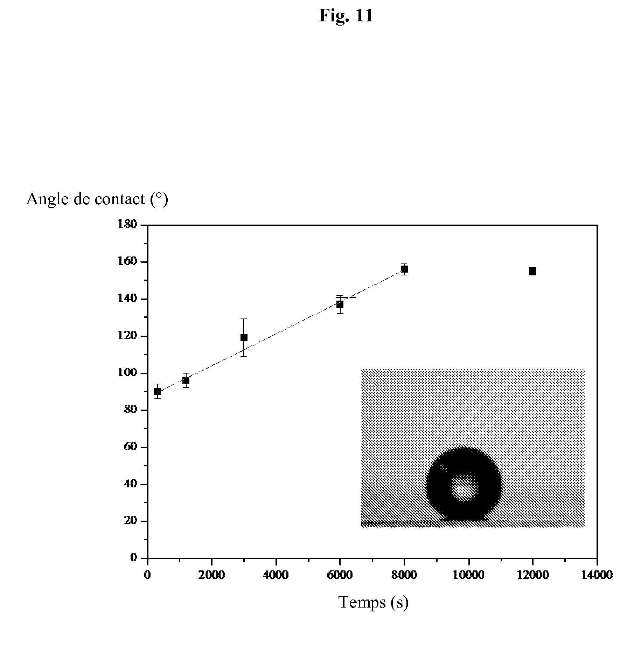

La figure 11 rapporte la valeur de l'angle de contact (en °) en fonction du temps d'attraction des particules P2 (en secondes). Une photo montrant le mouillage de la surface structurée pendant 8000 secondes par une goutte d'eau est également montrée.

Sa valeur maximale est de 160° pour les surfaces testées obtenues conformément au procédé de l'invention, et ce sans aucune hydrophobisation. A titre comparatif, la valeur la plus élevée trouvée dans la littérature pour des surfaces de cuivre déposé sous champ électrique continu est de 138° (X Liu et al., Thin Solid Films, 2010, 518, 3731-3734).

Ces résultats démontrent par conséquent le caractère super-hydrophobe des surfaces produites selon le procédé conforme à l'invention.

## Revendications

1. Procédé de préparation d'une surface micro- ou nanostructurée par des micro- ou nanostructures organisées inorganiques et/ou organiques, ledit procédé mettant en oeuvre des particules colloïdales et une cellule électrochimique comportant une électrode positive et une électrode négative, lesdites électrodes étant planes et parallèles l'une par rapport à l'autre, faces conductrices en vis-à-vis, et séparées l'une de l'autre au moyen d'un espaceur isolant comportant au moins deux ouvertures et délimitant un volume libre (V) entre les deux électrodes, ledit procédé étant **caractérisé en ce qu'**il comprend les étapes suivantes :
i) la préparation d'une dispersion de particules colloïdales hydrophiles monodisperses chargées électriquement (particules P1) dans une phase aqueuse, lesdites particules P1 ayant une taille supérieure ou égale à 0,5 µm environ ;
ii) la préparation d'une dispersion de particules colloïdales chargées électriquement (particules P2) dans une phase aqueuse, lesdites particules P2 ayant une taille inférieure à celle des particules P1, étant de même charge électrique que les particules P1, et renfermant éventuellement au moins une espèce électrochimique ;
iii) l'introduction de la dispersion de particules P1 dans le volume libre (V) par l'une des ouvertures de l'espaceur ;
iv) la migration des particules P1 vers la surface de l'électrode de charge opposée à celle des particules P1 (électrode de travail), par application d'un champ électrique sinusoïdal perpendiculairement auxdites électrodes,
v) l'application d'un champ électrique sinusoïdal de fréquences décroissantes à potentiel constant, pour provoquer l'agrégation des particules P1 à la surface de l'électrode de travail ;
vi) l'augmentation progressive de la fréquence jusqu'à obtention d'un réseau cristallin constitué d'une monocouche de particules P1 à la surface de l'électrode de travail ;
vii) l'immobilisation des particules P1 sous la forme dudit réseau cristallin, par superposition au champ électrique sinusoïdal, d'un champ électrique continu de signe opposé à la charge des particules P1, puis extinction du champ électrique sinusoïdal tout en maintenant le champ électrique continu pendant une durée suffisante pour provoquer l'adhésion des particules P1 à la surface de l'électrode de travail ;
viii) l'introduction, dans le volume libre V de la cellule électrochimique, de la dispersion de particules P2 et l'application d'un champ électrique continu pendant une durée suffisante pour provoquer la migration et la fixation des particules P2 sur la surface libre de l'électrode de travail sur laquelle s'est formé le réseau organisé de particules P1, et lorsque les particules P2 renferment une espèce électrochimique, l'oxydation ou la réduction de ladite espèce électrochimique à la surface de l'électrode de travail ;
ix) l'élimination des particules P1 de la surface de l'électrode pour obtenir une surface nanostructurée par les particules P2 ou par l'espèce électrochimique oxydée ou réduite apportée par les particules P2.

2. Procédé selon la revendication 1, **caractérisé en ce que** les particules P1 sont choisies parmi les particules sphériques de diamètre moyen compris entre 0,5 µm et 5 µm.

3. Procédé selon l'une quelconque des revendications précédentes, **caractérisé en ce que** la quantité de particules P1 au sein de la dispersion varie de 0,1 à 0,6 % en masse.

4. Procédé selon l'une quelconque des revendications précédentes, **caractérisé en ce que** les particules P2 sont choisies parmi les polymères chargés comportant au moins une fonction organique ayant une affinité pour l'électrode de travail, les particules métalliques fonctionnalisées en surface par au moins une fonction organique ayant une affinité pour l'électrode de travail et les nanotubes de carbone fonctionnalisés en surface par au moins une fonction organique ayant une affinité pour l'électrode de travail.

5. Procédé selon l'une quelconque des revendications 1 à 4, **caractérisé en ce que** les particules P2 sont choisies parmi les vésicules lamellaires à base d'au moins un tensioactif et renfermant ladite espèce électrochimique.

6. Procédé selon la revendication 5, **caractérisé en ce que** l'espèce électrochimique contenue dans les vésicules est choisie parmi les ions métalliques et les monomères rédox.

7. Procédé selon l'une quelconque des revendications 5 ou 6, **caractérisé en ce que** les vésicules lamellaires ont des dimensions comprises entre 0,1 µm et 1,5 µm.

8. Procédé selon l'une quelconque des revendications précédentes, **caractérisé en ce que** le champ électrique appliqué lors de l'étape iv) entre les deux deux électrodes varie de 100 à 150 V/cm et le réseau cristallin de particules P1 est alors un réseau hexagonal.

9. Procédé selon l'une quelconque des revendications 1 à 7, **caractérisé en ce que** le champ électrique appliqué lors de l'étape iv) entre les deux électrodes varie de 200 V/cm à 250 V/cm et le réseau cristallin de particules P1 est alors un réseau sous forme de chaînes constituées en moyenne par 3 particules P 1.

10. Procédé selon l'une quelconque des revendications précédentes, **caractérisé en ce que** le réseau cristallin de particule P1 obtenu à la surface de l'électrode de travail à l'issue de l'étape vi) se présente sous la forme d'un réseau hexagonal compact, d'un réseau hexagonal non compact ou bien encore sous la forme d'un réseau constitué de triplets de particules P1 isolés les uns des autres, lesdits triplets étant arrangés en bâtons et/ou en triangles.

11. Procédé selon l'une quelconque des revendications précédentes, **caractérisé en ce qu'**il comprend en outre, après l'étape viii) de fixation des particules P2, une étape supplémentaire de fonctionnalisation des particules P2 par une biomolécule d'intérêt.

12. Procédé selon la revendication 11, **caractérisé en ce que** ladite étape supplémentaire de fonctionnalisation est réalisée soit juste après l'étape viii) de fixation des particules P2 et avant l'étape ix) d'élimination des particules P1, soit après l'étape ix) d'élimination des particules P1.

13. Procédé selon l'une quelconque des revendications 11 et 12, **caractérisé en ce que** les biomolécules d'intérêt sont choisies parmi l'ensemble des protéines portant une étiquette histidine, un ligand streptavidine ou un ligand biotine, les antigènes et les molécules d'acides nucléiques.

## Patentansprüche

1. Verfahren zur Herstellung einer mikro- oder nanostrukturierten Oberfläche durch anorganische und/oder organische organisierte Mikro-oder Nanostrukturen, wobei das Verfahren kolloidale Partikel und eine elektrochemische Zelle umsetzt, die eine positive und eine negative Elektrode aufweist, wobei die Elektroden eben und parallel zueinander mit den leitenden Flächen gegenüber und voneinander mittels eines isolierenden Spacers getrennt sind, der mindestens zwei Öffnungen aufweist und ein freies Volumen (V) zwischen den zwei Elektroden begrenzt, wobei das Verfahren **dadurch gekennzeichnet ist, dass** es die folgenden Schritte aufweist:
i) das Herstellen einer Dispersion elektrisch geladener monodispergierter hydrophiler kolloidaler Partikel (Partikel P1) in einer Wasserphase, wobei die Partikel P1 eine Größe größer oder gleich zirka 0,5 µm haben,
ii) das Herstellen einer Dispersion elektrisch geladener kolloidaler Partikel (Partikel P2) in einer Wasserphase, wobei die Partikel P2 eine Größe haben, die kleiner als die der Partikel P1 ist, dieselbe elektrische Ladung haben wie die Partikel P1, eventuell unter Einschluss mindestens einer elektrochemischen Spezies,
iii) das Einleiten der Dispersion aus Partikeln P1 in das freien Volumen (V) durch eine der Öffnungen des Spacers,
iv) das Migrieren der Partikel P1in Richtung der Oberfläche der Elektrode mit der entgegengesetzten Ladung der Partikel P1 (Arbeitselektrode) durch Anlegen eines sinusförmigen elektrischen Felds lotrecht zu den Elektroden,
v) das Anlegen eines sinusförmigen elektrischen Felds mit abfallenden Frequenzen mit konstantem Potential, um die Aggregation der Partikel P1 auf der Oberfläche der Arbeitselektrode hervorzurufen,
vi) das schrittweise Erhöhen der Frequenz bis zum Erhalt eines kristallinen Netzes, das aus einer Monoschicht von Partikeln P1 auf der Oberfläche der Arbeitselektrode besteht,
vii) das Ruhigstellen der Partikel P1 in Form des kristallinen Netzes durch Überlagern des sinusförmigen elektrischen Felds mit einem stetigen elektrischen Feld mit entgegengesetztem Vorzeichen zur Ladung der Partikel P1, gefolgt von dem Ausschalten des sinusförmigen elektrischen Felds bei Aufrechterhaltung des stetigen elektrischen Felds während einer Dauer, die ausreichend ist, um das Anhaften der Partikel P1 auf der Oberfläche der Arbeitselektrode hervorzurufen,
viii) das Einleiten der Dispersion von Partikeln P2 in das freie Volumen V der elektrochemischen Zelle und das Anlegen eines stetigen elektrischen Felds während einer Dauer, die ausreichend ist, um die Migration und die Fixierung der Partikel P2 auf der freien Oberfläche der Arbeitselektrode hervorzurufen, auf der sich das organisierte Netz aus Partikeln P1 gebildet hat und, wenn die Partikel P2 eine elektrochemische Spezies einschließen, die Oxidation oder die Reduktion der elektrochemischen Spezies auf der Oberfläche der Arbeitselektrode,
ix) das Entfernen der Partikel P1 von der Oberfläche der Elektrode, um eine von den Partikeln P2 oder die oxidierte oder reduzierte elektrische Spezies, die von den Partikeln P2 bereitgestellt wurde, nanostrukturierte Oberfläche zu erhalten.

2. Verfahren nach Anspruch 1, **dadurch gekennzeichnet, dass** die Partikel P1 aus den sphärischen Partikeln mit einem mittleren Durchmesser zwischen 0,5 µm und 5 µm inklusive ausgewählt sind.

3. Verfahren nach einem der vorangehenden Ansprüche, **dadurch gekennzeichnet, dass** die Menge der Partikel P1 in der Dispersion von 0,1 bis 0,6 Masseprozent schwankt.

4. Verfahren nach einem der vorangehenden Ansprüche, **dadurch gekennzeichnet, dass** die Partikel P2 aus den geladenen Polymeren, die mindestens eine organische Funktion mit einer Affinität für die Arbeitselektrode aufweisen, den auf der Oberfläche von mindestens einer organischen Funktion mit einer Affinität für die Arbeitselektrode funktionalisierten Metallpartikeln und den auf der Oberfläche von mindestens einer organischen Funktion mit einer Affinität für die Arbeitselektrode funktionalisierten Kohlenstoff-Nanoröhrchen ausgewählt sind.

5. Verfahren nach einem der Ansprüche 1 bis 4, **dadurch gekennzeichnet, dass** die Partikel P2 aus den lamellaren Bläschen auf der Basis von mindestens einem Tensid unter Einschluss der elektrochemischen Spezies ausgewählt sind.

6. Verfahren nach Anspruch 5, **dadurch gekennzeichnet, dass** die in den Bläschen enthaltene elektrochemische Spezies aus den Metallionen und den Redox-Monomeren ausgewählt ist.

7. Verfahren nach einem der Ansprüche 5 oder 6, **dadurch gekennzeichnet, dass** die lamellaren Bläschen Abmessungen zwischen 0,1 µm und 1,5 µm inklusive haben.

8. Verfahren nach einem der vorangehenden Ansprüche, **dadurch gekennzeichnet, dass** das bei Schritt iv) zwischen den zwei Elektroden angelegte elektrische Feld von 100 bis 150 V/cm schwankt und das kristalline Netz aus Partikeln P1 dann ein sechseckiges Netz ist.

9. Verfahren nach einem der Ansprüche 1 bis 7, **dadurch gekennzeichnet, dass** das bei Schritt iv) zwischen den zwei Elektroden angelegte elektrische Feld von 200 V/cm bis 250 V/cm schwankt und das kristalline Netz aus Partikeln P1 dann ein Netz in Form von Ketten ist, die durchschnittlich aus drei Partikeln P1 bestehen.

10. Verfahren nach einem der vorangehenden Ansprüche, **dadurch gekennzeichnet, dass** das kristalline Netz aus Partikeln P1 auf der Oberfläche der Arbeitselektrode nach Schritt vi) ein kompaktes sechseckiges Netz, ein nicht kompaktes sechseckiges Netz oder auch ein Netz ist, das aus voneinander isolierten Triplets aus Partikeln P1 besteht, wobei die Triplets in Stäben und/oder in Dreiecken angeordnet sind.

11. Verfahren nach einem der vorangehenden Ansprüche, **dadurch gekennzeichnet, dass** es ferner nach Schritt viii) der Fixierung der Partikel P2 einen zusätzlichen Schritt der Funktionalisierung der Partikel P2 durch ein Interessens-Biomolekül umfasst.

12. Verfahren nach Anspruch 11, **dadurch gekennzeichnet, dass** der zusätzliche Funktionalisierungsschritt entweder direkt nach dem Schritt viii) der Fixierung der Partikel P2 und vor dem Schritt ix) der Entfernung der Partikel P1 oder nach dem Schritt ix) der Entfernung der P1 durchgeführt wird.

13. Verfahren nach einem der Ansprüche 11 und 12, **dadurch gekennzeichnet, dass** die Interessens-Biomoleküle aus der Gruppe der Proteine, die ein Histidin-Etikett, einen Streptavidin-Liganden oder einen Biotin-Liganden tragen, den Antigenen und den Nukleinsäuremolekülen ausgewählt sind.

## Claims

1. A method for preparing a micro- or nano-structured surface by inorganic and/or organic organized micro- or nano-structures, said method applying colloidal particles and an electrochemical cell including a positive electrode and a negative electrode, said electrodes being planar and parallel with each other, conducting faces facing each other and separated from each other by means of an insulating spacer including at least two apertures and delimiting a free volume (V) between both electrodes, said method being **characterized in that** it comprises the following steps:
i) preparing a dispersion of electrically charged monodisperse hydrophilic colloidal particles (particles P1) in an aqueous phase, said particles P1 having a size greater than or equal to about 0.5 µm;
ii) preparing a dispersion of electrically charged colloidal particles (particles P2) in an aqueous phase, said particles P2 having a smaller size than that of the particles P1, being of the same electric charge as the particles P1, and optionally containing at least one electrochemical species;
iii) introducing the dispersion of particles P1 into the free volume (V) through one of the apertures of the spacer;
iv) having the particles P1 migrate to the surface of the electrode with a charge opposite to that of the particles P1 (working electrode) by applying a sinusoidal electric field perpendicularly to said electrodes,
v) applying a sinusoidal electric field of decreasing frequencies at constant potential, in order to cause aggregation of the particles P1 at the surface of the working electrode;
vi) gradually increasing the frequency until a crystalline lattice consisting of a monolayer of particles P1 at the surface of the working electrode is obtained;
vii) immobilizing the particles P1 in the form of said crystalline lattice by superimposing to the sinusoidal electric field, a continuous electric field of a sign opposite to the charge of the particles P1, and then extinguishing the sinusoidal electric field while maintaining the continuous electric field for a sufficient period of time in order to cause adhesion of the particles P1 to the surface of the working electrode;
viii) introducing into the free volume V of the electrochemical cell, the dispersion of particles P2 and applying a continuous electric field for a sufficient period of time in order to cause migration and attachment of the particles P2 on the free surface of the working electrode, on which is formed the organized lattice of particles P1, and when the particles P2 contain an electrochemical species, oxidizing or reducing said electrochemical species at the surface of the working electrode;
ix) removing the particles P1 from the surface of the electrode in order to obtain a surface nanostructured by the particles P2 or by the oxidized or reduced electrochemical species brought by the particles P2.

2. The method according to claim 1, **characterized in that** the particles P1 are selected from spherical particles with an average diameter comprised between 0.5 µm and 5 µm.

3. The method according to any of the preceding claims, **characterized in that** the amount of particles P1 within the dispersion varies from 0.1 to 0.6% by mass.

4. The method according to any of the preceding claims, **characterized in that** the particles P2 are selected from charged polymers including at least one organic function having affinity for the working electrode, metal particles functionalized at the surface by at least one organic function having affinity for the working electrode and carbon nanotubes functionalized at the surface by at least one organic function having affinity for the working electrode.

5. The method according to any of claims 1 to 4, **characterized in that** the particles P2 are selected from lamellar vesicles based on at least one surfactant and containing said electrochemical species.

6. The method according to claim 5, **characterized in that** the electrochemical species contained in the vesicles is selected from metal ions and redox monomers.

7. The method according to any of claims 5 or 6, **characterized in that** the lamellar vesicles have dimensions comprised between 0.1 µm and 1.5 µm.

8. The method according to any of the preceding claims, **characterized in that** the electric field applied during step iv) between both electrodes varies from 100 to 150 V/cm and the crystalline lattice of particles P1 is then a hexagonal lattice.

9. The method according to any of claims 1 to 7, characterizing that the electric field applied during step iv) between both electrodes varies from 200 V/cm to 250 V/cm and the crystalline lattice of particles P1 is then a lattice in the form of chains on the average formed by three particles P1.

10. The method according to any of the preceding claims, **characterized in that** the crystalline particle P1 lattice obtained at the surface of the working electrode at the end of step vi) appears as a compact hexagonal lattice, as a non-compact hexagonal lattice or else further as a lattice consisting of triplets of particles P1 isolated from each other, said triplets being arranged as rods and/or triangles.

11. The method according to any of the preceding claims, **characterized in that** it further comprises, after step viii) for attaching the particles P2, an additional step for functionalizing the P2 particles with a biomolecule of interest.

12. The method according to claim 11, **characterized in that** said additional functionalization step is carried out either just after step viii) for attaching the particles P2 and before the step ix) for removing the particles P1, or after the step ix) for removing the particles P1.

13. The method according to any of claims 11 and 12, **characterized in that** the biomolecules of interest are selected from the whole of the proteins bearing a histidine label, a streptavidin ligand or a biotin ligand, antigens and nucleic acid molecules.
